# FASCICULE DE BREVET EUROPEEN

(11) **EP 0 592 286 B1**
(45) Date de publication et mention de la délivrance du brevet: **14.05.1997**
(21) Numéro de dépôt: 93402399.5
(22) Date de dépôt: 01.10.1993
(51) Int. Cl.: F16D 66/02

(54) **Dispositif détecteur d'usure pour garnitures de friction**
Verschleisszustand-Erfassungsvorrichtung für Reibbremsbeläge
Wear-detection device for friction brakes

(30) Priorité: 09.10.1992 FR 9212001
(43) Date de publication de la demande: 13.04.1994
(73) Titulaire: RENAULT VEHICULES INDUSTRIELS, F-69003 Lyon (FR)
(72) Inventeur: Vial, Patrice, F-38490 Saint Andre le Gaz (FR)
(74) Mandataire: Ernst-Schonberg, Michel

(56) Documents cités:
- DE-A- 2 131 720
- FR-A- 1 551 663
- FR-A- 2 123 972
- US-A- 3 388 773

## Description

L'invention concerne un dispositif détecteur d'usure pour garnitures de friction d'un frein dans lequel un contact électrique mobile est fixé à un entraîneur et déplacé par l'organe actionneur du frein.

On connaît déjà du document EP-A-0460371 un dispositif de ce type qui permet la mesure continue de l'usure des garnitures.

L'invention a pour objet un dispositif détecteur d'une garnitures de friction dans lequel un contact électrique mobile est fixé à un entraîneur et déplacé par l'organe actionneur d'un frein, ledit organe étant cinématiquement relié audit entraîneur qui est contenu dans un boîtier assemblé porteur des moyens de guidage dudit contact électrique mobile par rapport à un contact électrique fixe, caractérisé par le fait que l'entraîneur est emmanché dans un cylindre enrouleur d'une résistance variable placée dans une rainure de stockage portée par un couvercle du boîtier et que ledit cylindre enrouleur porte un contact tournant situé à distance variable de l'extrémité libre de la résistance.

Le détecteur ainsi réalisé peut être réarmé par un outil de commande à la suite du démontage du boîtier au cours du changement des garnitures de friction et réduit par voie de conséquence les révisions inutiles.

D'autres caractéristiques et avantages de l'invention apparaîtront à la lecture de la description d'un exemple de réalisation du détecteur en référence au dessin annexé dans lequel :
- la figure 1 est une vue en élévation avec coupe partielle d'une partie d'un frein à tambour comportant un actionneur mécanique incorporant le détecteur d'usure conforme à l'invention,
- la figure 2 est une vue en élévation de l'actionneur mécanique équipé du dispositif détecteur d'usure,
- la figure 3 est une vue en coupe axiale du dispositif détecteur dans le plan III de la figure 4,
- la figure 4 est une vue en coupe radiale du dispositif détecteur dans le plan IV de la figure 3,
- la figure 5 est une vue en coupe radiale du dispositif détecteur dans le plan IV de la figure 3 en correspondance avec l'état d'usure des garnitures,
- la figure 6 est une vue en coupe radiale du dispositif détecteur dans le plan VI de la figure 3,
- la figure 7 est une vue en coupe axiale agrandie du détail VII de la figure 3 et montre la liaison entre l'entraîneur et le boîtier du dispositif détecteur.

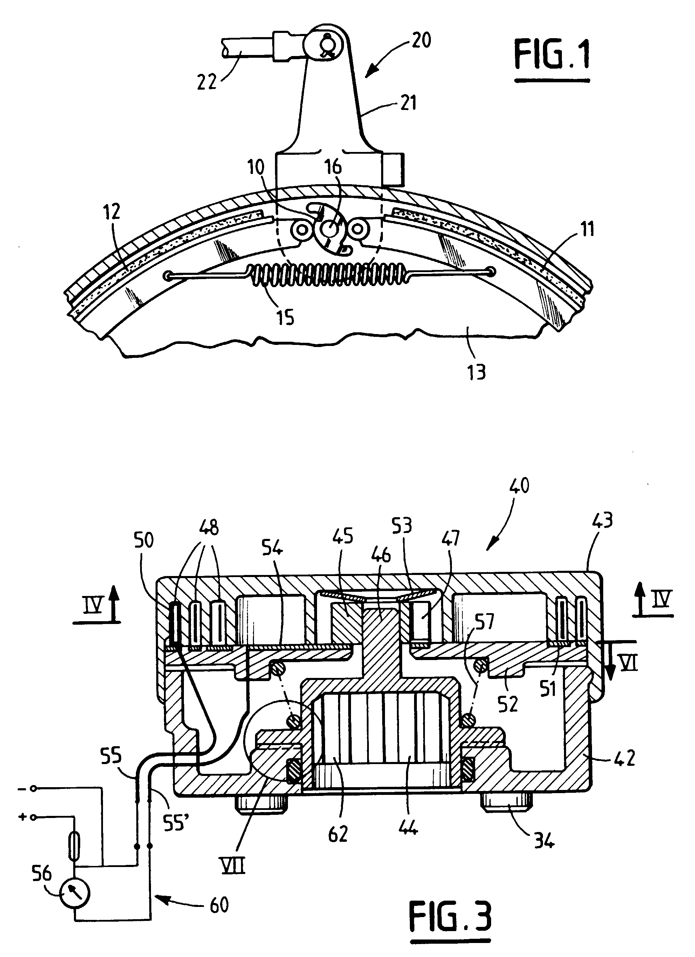

En se référant à la figure 1 on a représenté à titre d'exemple d'application une partie d'un frein à tambour dans lequel une came 10 actionne deux garnitures 11, 12 montées pivotantes sur un plateau support fixe 13. Les garnitures 11, 12 peuvent se rapprocher du tambour sous l'action de la came 10 et s'éloigner du tambour 14 sous l'action d'un ressort de rappel 15.

La came 10 est solidaire en rotation d'un arbre de sortie 16, d'un dispositif d'actionnement 20 et s'étend au travers du plateau support 13.

Un exemple du dispositif d'actionnement est décrit dans la publication FR-A-2277274.

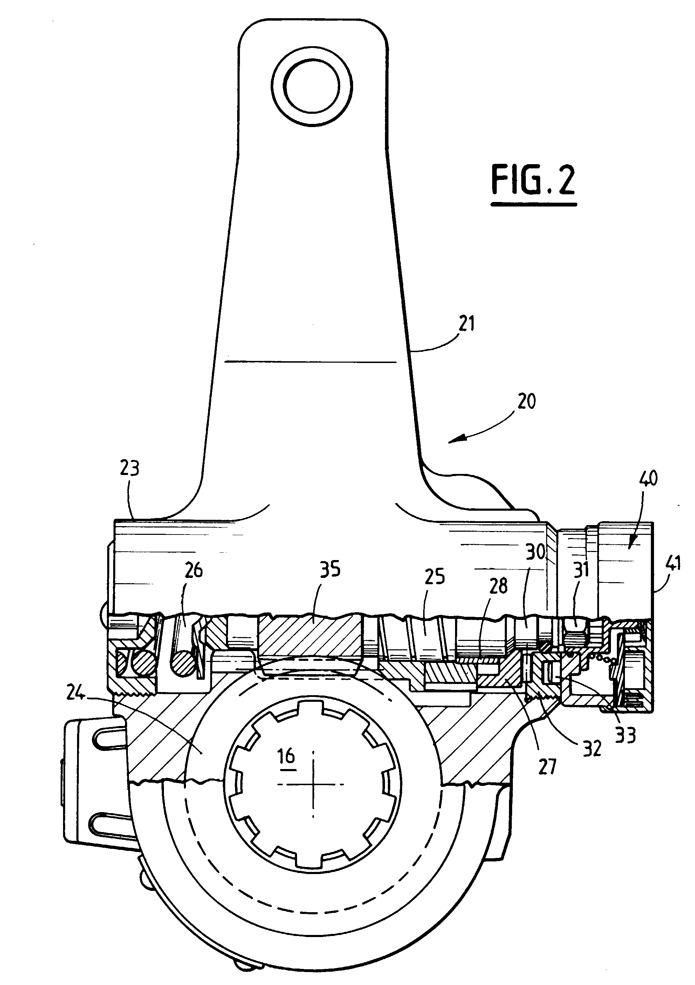

Le dispositif d'actionnement représenté à la figure 2 est essentiellement constitué par un levier 21 soumis à l'action d'une tringle 22. Le levier 21 est porté par un carter 23 dans lequel est monté un pignon 24. Le pignon 24 est associé à l'arbre 16 par l'intermédiaire de cannelures. Une rotation du pignon 24 par rapport au carter 23 peut entraîner alors une rotation correspondante de l'arbre 16.

Lors de la commande normale du frein le carter 23 entraîne directement le pignon 24 pour actionner la came 10.

Dans le carter 23 est monté un arbre d'ajustement 25 en appui axial sur un ressort 26 immobilisé dans le carter. L'arbre d'ajustement 25 est poussé axialement par le ressort 26 vers un anneau de butée 27 contre lequel est comprimé un ressort antagoniste 28. L'arbre 25 porte une vis sans fin 35 destinée à actionner le pignon 24 comme il sera expliqué ci-après.

L'extrémité de l'arbre 25 est réalisé sous la forme d'une vis 30 à tête hexagonale 31.

L'anneau de butée 27 est en appui facial sur un anneau support 32 à filetage extérieur et immobilisé dans le carter 23. La face extérieure de l'anneau support 32 possède par ailleurs des trous de montage 33, des pieds d'immobilisation 34 du détecteur d'usure 40 conforme à l'invention.

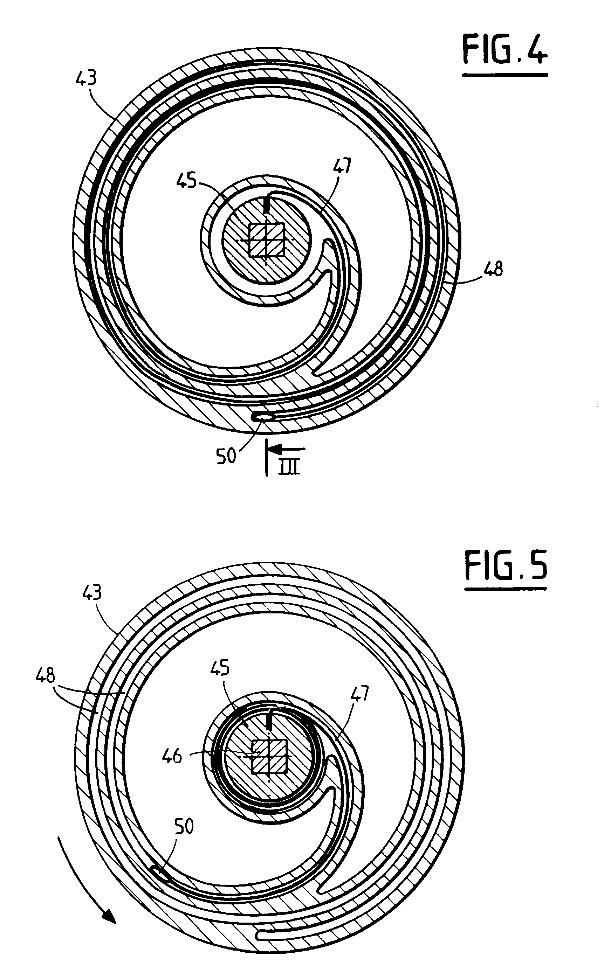

Le détecteur montré plus en détail aux figures 3 à 7 est constitué par un boîtier 41 montré à la figure 3.

Le boîtier 41 est constitué par un corps de boîtier fixe 42 porteur des pieds d'immobilisation au contact du carter 23.

Le boîtier fixe 42 est fermé par un couvercle 43 et contient un entraîneur 44 réalisés en un matériau isolant.

Ainsi que cela est montré à la figure 3 et 4 le couvercle 43 contient un cylindre enrouleur 45 emmanché sur l'extrémité d'une queue d'entraînement 46 de l'entraîneur 44.

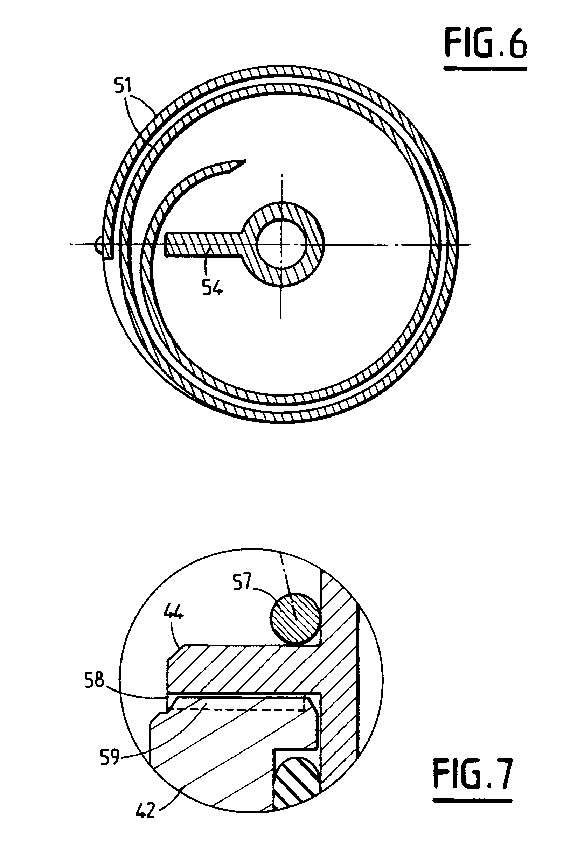

Le cylindre enrouleur possède une fente de montage de l'extrémité d'une résistance variable 47. Cette dernière est constituée par une bande conductrice placée dans une rainure 48 de stockage en forme de spirale portée par le couvercle 43. La rainure 48 assure le guidage de l'extrémité libre de la résistance 47 réalisée sous la forme d'un contact frottant 50 en appui sur une piste conductrice 51 représentée à la figure 6.

Une face du cylindre enrouleur 45 constitue un contact électrique tournant en appui sous l'action d'un ressort 53 sur un disque isolant 52 fixe porteur de la piste 51. A cet effet la piste 51 est complétée par une piste centrale circulaire 54, et les pistes 51, 54 sont individuellement reliées à des conducteurs 55, 55' destinés à être branchés à un instrument 56 d'un circuit potentiométrique 60 qui permet la mesure d'un potentiel variable en fonction de la variation de longueur de la résistance 47 au cours de son enroulement sur l'entraîneur 44.

L'entraîneur 44 est monté à déplacement axial à l'encontre de la force antagoniste exercée par un ressort 57. Le ressort 57 est monté en compression entre le disque 52 et l'entraîneur 44. Le ressort 57 repousse de la sorte l'entraîneur 44 porteur d'une denture 58 destinée à l'immobilisation angulaire de l'entraîneur par rapport à une denture homologue 59 portée par le boîtier 42 (figure 7).

L'entraîneur 44 possède par ailleurs un logement 62 d'introduction d'un outil de repositionnement de l'extrémité libre 50 de la résistance 47 à la suite d'un changement des garnitures de friction usées.

Le dispositif détecteur qui vient d'être décrit fonctionne de la manière suivante.

Lors de la commande du frein le dispositif d'actionnement 20 est déplacé vers la droite de la figure 1.

Le déplacement du levier 21 entraîne la rotation de l'arbre 16 et de la came 10 réalisant de la sorte le serrage des garnitures 11, 12 au contact du tambour 14.

Lorsque les garnitures de friction 11, 12 possèdent une usure anormale, l'arbre 25 transmet à la vis sans fin 35 une course de compensation transmise à l'entraîneur 44. Ce dernier exerce dans ce cas un effort suffisant nécessaire au dégagement des dentures 58, 59 et à l'enroulement d'une fraction de la résistance 47 sur le cylindre 45.
Le dispositif détecteur permet de la sorte l'affichage au tableau de bord d'une information rhéostatique représentative du degré d'usure des garnitures de freinage. Il permet en outre l'affichage et la transmission d'informations aux systèmes de contrôle de freinage.

## Revendications

1. Dispositif détecteur d'usure pour garnitures de friction dans lequel un contact électrique mobile (50) est fixé à un entraîneur (44) et déplacé par l'organe (20) actionneur d'un frein, ledit organe (20) étant cinématiquement relié audit entraîneur (40) qui est contenu dans un boîtier (42) assemblé porteur des moyens de guidage (48) dudit contact électrique mobile (50) par rapport à un contact électrique fixe, caractérisé par le fait que l'entraîneur (44) est emmanché dans un cylindre (45) enrouleur d'une résistance (47) variable placée dans une rainure (48) de stockage portée par un couvercle (43) du boîtier (42) et que ledit cylindre enrouleur (45) porte un contact tournant situé à distance variable de l'extrémité libre (50) de la résistance (47).

2. Dispositif détecteur selon la revendication 1, caractérisé par le fait que le contact tournant et l'extrémité libre de la résistance (47) sont en appui sur des pistes conductrices (51, 54) portées par un disque fixe (52) au contact desquelles s'établit une différence de potentiel variable en fonction de la variation de la résistance (47) au fur et à mesure de son enroulement sur l'entraîneur (44).

3. Dispositif détecteur selon l'une quelconque des revendications 1 à 2, caractérisé par le fait que l'entraîneur (44) est monté à déplacement axial à l'encontre de la force antagoniste exercée par un ressort (57) monté en compression entre le disque (52) et l'entraîneur (44) et que ce dernier possède une denture (58) d'immobilisation angulaire au contact d'une denture (59) homologue portée par le boîtier (42) et un logement (62) d'introduction d'un outil de positionnement du détecteur à la suite d'une usure des garnitures de friction.

## Claims

1. A wear detector device for friction linings, in which a movable electrical contact (50) is fixed to an entrainment means (44) and displaced by the member (20) for actuating a brake, said member (20) being kinematically to said entrainment means (40) which is contained in an assembled casing (42) carrying guide means (48) for said movable electrical contact (50) with respect to a fixed electrical contact, characterised in that the entrainment means (44) is engaged into a winding cylinder (45) of a variable resistance (47) which is placed in a storage groove (48) carried by a cover (43) of said casing (42) and that said winding cylinder (45) carries a rotating contact disposed at a variable distance from the free end (50) of the resistance (47).

2. A detector device according to claim 1 characterised in that the rotary contact and the free end of the resistance (47) bear against conductor tracks (51, 54) carried by a fixed disc (52), in contact with which there is established a potential difference variable in dependence on the variation in the resistance (47) as it is wound on to the entrainment means (44).

3. A detector device according to either one of claims 1 and 2 characterised in that the entrainment means (44) is mounted for axial displacement against the counteracting force applied by a spring (57) mounted in compression between the disc (52) and the entrainment means (44) and that the latter has an angular immobilisation tooth arrangement (58) in contact with a homologous tooth arrangement (59) carried by the casing (42) and a housing (62) for the introduction of a tool for positioning the detector following wear of the friction linings.

## Patentansprüche

1. Vorrichtung zur Ermittlung des Verschleißes von Bremsbelägen, bei der ein beweglicher elektrischer Kontakt (50) an einem Mitnehmer (44) befestigt ist und durch ein Bremsbetätigungsteil (20) verschoben wird, wobei das Teil (20) kinetisch mit dem Mitnehmer (44) verbunden ist, der in einem zusammengesetzten Gehäuse (42) angeordnet ist, das eine Führungsanordnung (48) trägt für den beweglichen elektrischen Kontakt (50) bezüglich eines feststehenden elektrischen Kontaktes, dadurch gekennzeichnet, daß der Mitnehmer (44) in eine Wickeltrommel (45) für einen variablen Widerstand (47) eingreift, der in einer Aufnahmenut (48) angeordnet ist, welche von einem Deckel (43) des Gehäuses (42) getragen wird und daß die Wickeltrommel (45) einen Drehkontakt aufweist, der mit variablem Abstand zum freien Ende (50) des Widerstandes (47) angeordnet ist.

2. Vorrichtung nach Anspruch 1, dadurch gekennzeichnet, daß der Drehkontakt und das freie Ende des Widerstandes (57) sich auf leitenden Bahnen (51, 54) abstützen, die von einer feststehenden Scheibe (52) getragen werden und bei deren Berührung eine variable Potentialdifferenz als Funktion der Variation des Widerstandes (47) auftritt, je nach dessen Aufwicklung auf den Mitnehmer (44).

3. Vorrichtung nach einem der Ansprüche 1 und 2, dadurch gekennzeichnet, daß der Mitnehmer (44) axial verschiebbar gegen die entgegengesetzte Wirkung einer Feder (57) angeordnet ist, welche in komprimierter Weise zwischen der Scheibe (52) und dem Mitnehmer (44) angeordnet ist und daß letzterer eine Verzahnung (58) zur winkelmäßigen Feststellung im Eingriff mit einer am Gehäuse (42) angeordneten angepaßten Verzahnung (59) aufweist, sowie eine Einführöffnung (62) für ein Stellwerkzeug der Vorrichtung nach der Abnutzung der Bremsbeläge.
